# EUROPEAN PATENT SPECIFICATION

(11) **EP 3 567 411 B1**
(45) Date of publication and mention of the grant of the patent: **25.06.2025**
(21) Application number: 17896746.9
(22) Date of filing: 14.02.2017
(51) Int. Cl.: G02B 6/44, G02B 6/255

(54) **FUSION SPLICE AND DISTRIBUTION CLOSURE**
FUSIONSSPLEISS UND VERTEILUNGSVERSCHLUSS
ENCEINTE D'ÉPISSAGE PAR FUSION ET DE DISTRIBUTION

(43) Date of publication of application: 13.11.2019
(73) Proprietor: Huawei Technologies Co., Ltd., Longgang District Shenzhen, Guangdong 518129 (CN)
(72) Inventor: YAN, Hongyu, Shenzhen Guangdong 518129 (CN); XIONG, Wei, Shenzhen Guangdong 518129 (CN); WANG, Yeren, Shenzhen Guangdong 518129 (CN); SHU, Siwen, Shenzhen Guangdong 518129 (CN)
(74) Representative: Gill Jennings & Every LLP
(86) International application number: PCT/CN2017/073497
(87) International publication number: WO 2018/148867

(56) References cited:
- WO-A1-2014/095310
- CN-A- 101 825 755
- CN-U- 202 351 470
- CN-U- 204 101 782
- CN-U- 205 484 971
- CN-U- 205 809 371
- CN-Y- 2 842 460
- JP-A- 2004 198 471
- US-A- 5 185 845
- US-A- 5 917 984
- US-A1- 2010 183 274
- US-A1- 2010 329 624
- US-A1- 2016 238 811

## Description

### TECHNICAL FIELD

The present invention relates to the field of fiber splicing and termination, and in particular, to a splicing and termination tray.

### BACKGROUND

A splicing and termination tray is mainly used for splicing and distribution of a cable in a fiber distribution terminal and an optical distribution frame. A structure of a conventional splicing and termination tray is generally divided into two layers, namely, an upper layer and a lower layer. The upper layer is used for splicing, and the lower layer is used for distribution and fiber routing. A common capacity of the splicing and termination tray is 12 cores or 24 cores.

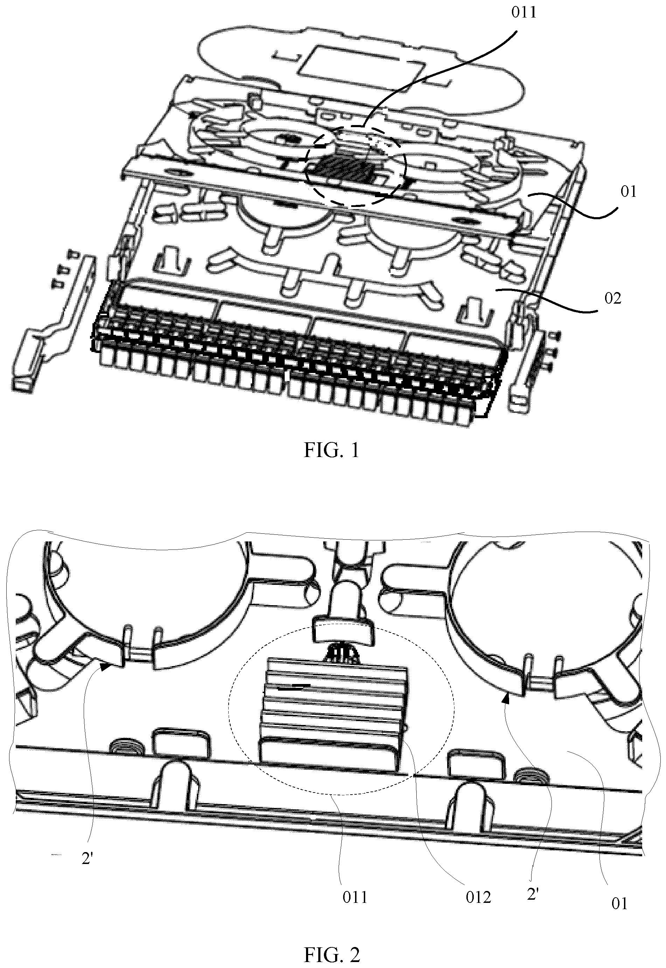

An existing splicing and termination tray, as shown in FIG. 1 and FIG. 2, includes an upper splice tray 01 and a lower splice tray 02. The upper splice tray 01 is provided with a splice region 011. A plurality of splice slots 012 are provided in the splice region 011. One splice slot 012 is used to fasten one core of to-be-spliced cable. After two cables are spliced, a splice protector 03 is sleeved at a splice point.

In the existing splicing and termination tray, all cables are coiled in the splice region 011, and the splice slot 012 is completed by using a part. Splice protectors 03 of all the cables are clamped into the splice slots 012. During maintenance, when a splice protector 03 is to be moved or taken out for maintenance, an irrelevant splice protector 03 mounted above the splice protector 03 needs to be taken out. In this case, another irrelevant cable is affected (for example, the cable is excessively bent and an excessive loss is caused), affecting a service of the another cable.

CN2014101782 describes a box body of a utility model which is provided with two sets of splice trays, each set of splice trays including at least one splice tray arranged on top of each other, and adjacent splice trays are connected by a hinge and a rotating shaft.

US5917984 describes a management-capable splice cassette for the telecommunication and data technique, for receiving carrier shells for two glass fibers each. A housing is provided with a cable connection device and a carrier is connected to said housing. The carrier shells are connected to the carrier in a rotatable manner.

WO2014095310 describes a splice module comprising a housing and a thereto interconnected drawer.

The drawer comprises a front panel with a plurality of sockets and a tray which in a first position extends adjacent to one side of the housing. The tray comprises at least one opening across which at least one optical fibre crosses a base of the tray in a vertical direction.

US20160238811 describes an optical fiber interconnection tray. The interconnection tray has a base extending longitudinally from a first end to a second end, with a cable entrance at the first end of the tray.

US5185845 describes an optical fiber cable closure which includes a cable termination assembly and a cover into which the termination assembly is inserted. The cable termination assembly includes two spaced end plates through which cables to be spliced extend.

CN101825755 describes an optical splitter fixing module provided on an upper surface of a cover body of a wall-mounted double-layer optical splitter box, and an optical splitter is installed on the cover through the optical splitter fixing module, the optical splitter and a fusion splice tray. CN202351470 describes an indoor wall-mounted optical splitting and splitting box mainly composed of a box body, an optical cable installation device, an optical fiber fusion splicing device, a fiber storage device, an adapter wiring device and an optical splitting device. The box body is composed of a box bottom and a box hinge, and a plurality of wire entry holes are provided at the top and left of the box body respectively.

### SUMMARY

The present invention provides a splicing and termination tray according to claim 1, to isolate splice points in a splice region, so that when one of circuits is maintained, there is relatively small impact on another circuit, thereby reducing interference to a service of the another circuit.

To achieve the foregoing objective, the following technical solutions are used in the embodiments of the present invention.

According to the claimed invention, a splicing and termination tray is disclosed. The splicing and termination tray includes a base. A plurality of splice trays independent of each other are disposed on the base. The splice tray includes a splice region. One or more splice slots are provided in the splice region. One splice slot is configured to fasten one core of to-be-spliced cable.

The plurality of splice trays independent of each other are disposed on the base of the splicing and termination tray provided according to the claimed invention. In addition, the one or more splice slots are provided in the splice region of the splice tray. One splice slot is configured to fasten one core of to-be-spliced cable. In this way, cables introduced into the splicing and termination tray may be divided into a plurality of groups. Each group of cables enter different splice trays to perform coiling and splicing functions of the cables. One-core or multi-core cable splice can be implemented in the splice region of each splice tray. The splice trays are independent of each other and do not affect each other. In this way, splice points in the splice region are maximally isolated. When a maintenance engineer maintains one of circuits, there is relatively small impact on another circuit, thereby greatly reducing interference to a service of the another circuit. One core of to-be-spliced cable is a cable spliced by two to-be-spliced cables.

Optionally one to four splice slots are provided in the splice region.

In this way, relative independence between the cables in the splice slots can be easily ensured. When an operator maintains the splice tray, mutual interference is not likely to be generated between the cables.

Optionally two splice slots are provided in the splice region.

When the two splice slots are provided in the splice region, two cables (where one cable receives a signal, and the other cable sends a signal) of one service circuit may be fastened on one splice tray, so that management of the cables is more refined, and classification management of the cables is facilitated.

According to the claimed invention, the plurality of splice trays are separately hinged to the base.

In this way, when a cable in one of the plurality of splice trays is maintained, a splice tray above the splice tray may be turned, so that the splice tray above the splice tray does not block the splice tray, thereby facilitating maintenance performed by the operator.

According to the claimed invention, the plurality of splice trays are detachably separately hinged to the base.

In this way, when splice trays of different specifications are required for replacement or one of the splice trays on the base is damaged, an original splice tray may be detached from the base, and then a new splice tray is hinged to the base, thereby greatly facilitating replacement of a splice tray.

According to the claimed invention, there are an even number of splice trays, every two splice trays overlap each other and form a splice tray group, and when a quantity of splice tray groups is greater than or equal to 2, the splice tray groups are disposed in a staggered manner.

In such a disposition manner, the splice tray groups can be independent of each other and do not affect each other, and when a cable in one of the splice tray groups is maintained, normal operation of a cable in another splice tray group is not affected.

According to the claimed invention, a plurality of first bump groups are fastened on an upper surface of the base, each first bump group is correspondingly connected to one splice tray group, each first bump group includes two first bumps disposed opposite to each other, two connection lugs are disposed on a side edge of the splice tray, and the two connection lugs are hinged to the two first bumps respectively by using a first hinged structure.

Two splice trays in each splice tray group are respectively hinged to first bumps disposed on the base by using connection lugs disposed on side edges of the splice trays. Therefore, when a cable in a splice tray located on a lower part of the splice tray group is maintained, a splice tray located on an upper part may be turned, so that the splice tray located on the upper part does not block the splice tray located on the lower part, thereby facilitating the maintenance of the operator. In addition, the first bump group may alternatively include one first bump. One connection lug may alternatively be disposed on a side edge of the splicing and termination tray. The connection lug is hinged to the first bump by using the first hinged structure. However, compared with the solution of disposing one first bump and one connection lug, based on the solution of disposing two first bumps and two connection lugs, turning of the splice trays in the splice tray group can be more stable, and the splice trays more easily achieve balance during turning.

According to the claimed invention, the two connection lugs each are made of an elastic material, the first hinged structure includes a first rotating shaft and a first hinged hole, one first rotating shaft is disposed on each of the two connection lugs, the first rotating shafts on the two connection lugs are located on a same axis, a first hinged hole corresponding to the first rotating shaft is disposed on the first bump, and the first rotating shaft passes through the first hinged hole.

When the two splice trays in the splice tray group need to be detached and replaced, an external force may be applied to the connection lugs, so that the two connection lugs generate elastic deformation, and the first rotating shafts on the two connection lugs are separated from the first hinged holes corresponding to the first rotating shafts, thereby implementing convenient detachment of the two splice trays in the splice tray group and the base. Similar to the detachment, an external force is applied to the two connection lugs, so that the first rotating shafts on the two connection lugs are hinged to the first hinged holes corresponding to the first rotating shafts, thereby implementing convenient mounting of the two splice trays in the splice tray group and the base. In addition, disposition positions of the first rotating shafts and the first hinged holes may alternatively be exchanged. Specifically, one first hinged hole is provided on each of the two connection lugs. The first hinged holes on the two connection lugs are located on a same axis. A first rotating shaft corresponding to the first hinged hole is disposed on the first bump. The first rotating shaft passes through the first hinged hole. Based on the solution, convenient detachment and mounting of the two splice trays in the splice tray group and the base can also be implemented.

Optionally a plurality of bosses are disposed in the splice tray, a side wall of the boss is configured to wind the to-be-spliced cable, and a radius of a corner of the side wall of the boss is greater than or equal to 30 millimeters.

This ensures that a bending radius of the cable is not less than 30 millimeters, thereby facilitating improvement of a service life and a tensile feature of the cable.

### BRIEF DESCRIPTION OF DRAWINGS

To describe the technical solutions in the embodiments of the present invention or in the prior art more clearly, the following briefly describes the accompanying drawings required for describing the embodiments or the prior art. Apparently, the accompanying drawings in the following description show merely some embodiments of the present invention, and a person of ordinary skill in the art may derive other drawings from these accompanying drawings without creative efforts.
FIG. 1 is a schematic diagram of assembly of an existing splicing and termination tray;
FIG. 2 is a partial view of a splice region of an upper splice tray in an existing splicing and termination tray;
FIG. 3 is a partial view of a splicing and termination tray according to an embodiment of the present invention;
FIG. 4 is a schematic structural diagram when two splice trays in a splice tray group relatively invert according to an embodiment of the present invention (where a direction indicated by a wide arrow is an inversion direction);
FIG. 5 is a schematic diagram of a first hinged structure in a splice tray group according to an embodiment of the present invention;
FIG. 6 is a schematic diagram of disposition of a first hinged hole in a first hinged structure in a splice tray group according to an embodiment of the present invention;
FIG. 7 is a schematic diagram of disposition of a first rotating shaft in a first hinged structure in a splice tray group according to an embodiment of the present invention; and
FIG. 8 is a top view of a splice tray according to an embodiment of the present invention.

### DESCRIPTION OF EMBODIMENTS

The following describes the embodiments of the present invention in detail with reference to accompanying drawings.

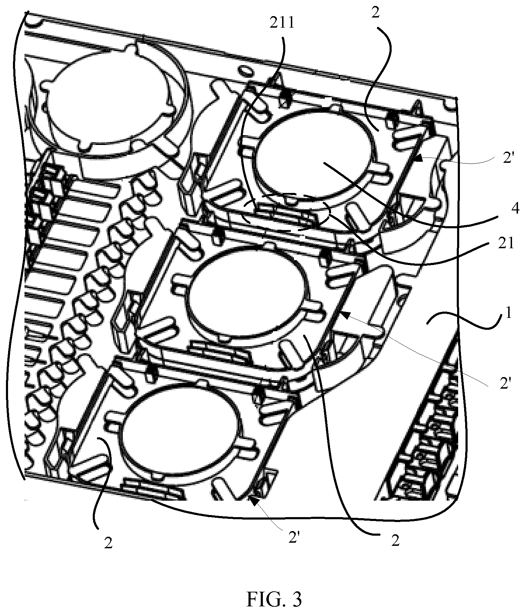

Referring to FIG. 3, an embodiment of the present invention provides a splicing and termination tray, including a base 1. A plurality of splice trays 2 independent of each other are disposed on the base 1. The splice tray 2 includes a splice region 21. One or more splice slots 211 are provided in the splice region 21. One splice slot 211 is configured to fasten one core of to-be-spliced cable.

The plurality of splice trays 2 independent of each other are disposed on the base 1 of the splicing and termination tray provided in this embodiment of the present invention. In addition, the one or more splice slots 211 are provided in the splice region 21 of the splice tray 2. One splice slot 211 is configured to fasten one core of to-be-spliced cable. In this way, cables introduced into the splicing and termination tray may be divided into groups. The groups of cables enter different splice trays 2 respectively to perform coiling and splicing functions of the cables. Splicing of one-core or multi-core cables may be implemented in the splice region 21 of each splice tray 2. The splice trays 2 are independent of each other and do not affect each other. In this way, splice points in the splice region 21 are maximally isolated. When a maintenance engineer maintains one of circuits, there is relatively small impact on another circuit, thereby greatly reducing interference to a service of the another circuit. "One core of to-be-spliced cable" is a cable spliced by two to-be-spliced cables.

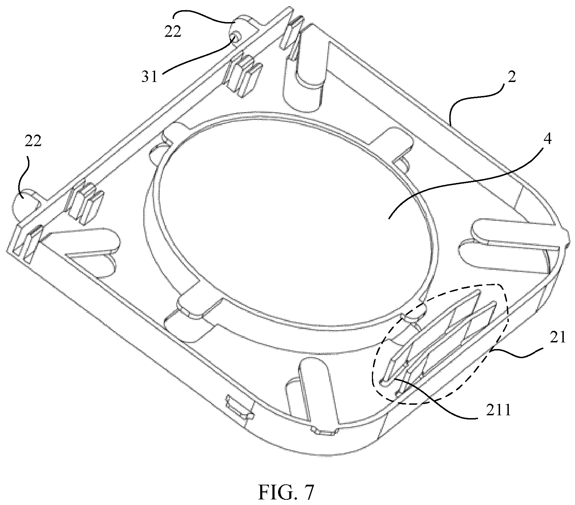

It is not suitable to dispose an excessively large quantity of splice slots 211 in the splice region 21. When the quantity of splice slots 211 exceeds 5, when an operator maintains one cable, another cable is easily affected by the maintenance. To reduce mutual interference of cables in the splice tray 2 during the maintenance, as shown in FIG. 7, one to four splice slots 211 are provided in the splice region 21. A relatively small quantity of splice slots 211 are provided in the splice region 21. In this way, relative independence between the cables in the splice slot 211 can be easily ensured. When the operator maintains the splice tray 2, mutual interference is not likely to be generated between the cables.

To facilitate management of the cables in the splice tray 2, as shown in FIG. 7, two splice slots 211 are provided in the splice region 21. When the two splice slots 211 are provided in the splice region 21, two cables (one cable for receiving a signal and the other cable for sending a signal) of one service circuit may be fastened on one splice tray 2, so that management of the cables is more refined, and classification management of the cables is facilitated.

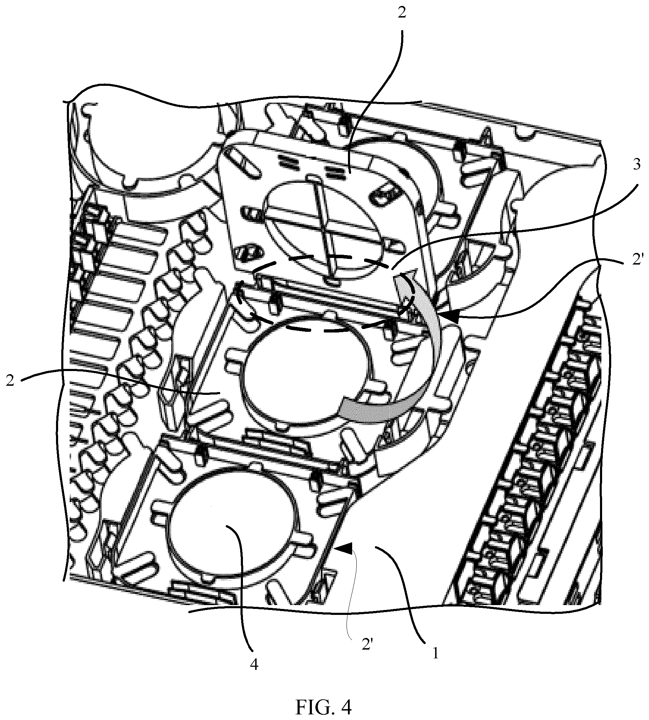

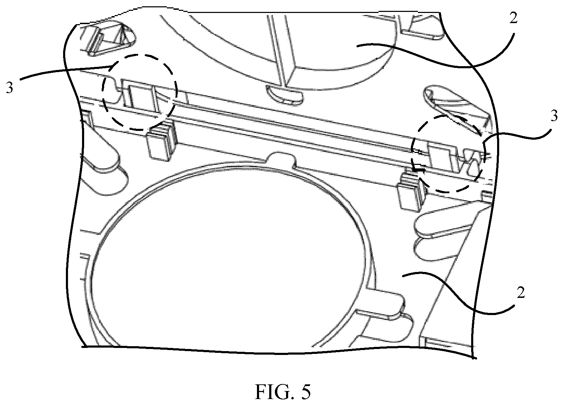

Because the plurality of splice trays 2 are disposed on the base 1, it is inevitable that the splice trays 2 block each other. In this case, when the operator intends to maintain one of the splice trays 2, the operator first needs to move another splice tray 2 that blocks the splice tray 2. This causes great inconvenience to maintenance performed by the operator. To resolve inconvenience for the operator during maintenance of the cables, as shown in FIG. 4 and FIG. 5, the plurality of splice trays 2 are separately hinged to the base 1. In this way, when a cable in one of the plurality of splice trays 2 is maintained, another splice tray 2 that is above the splice tray 2 may be turned, so that the another splice tray 2 that is above the splice tray 2 does not block the splice tray 2, thereby facilitating maintenance performed by the operator.

To facilitate replacement of a splice tray 2, as shown in FIG. 4 and FIG. 5, the plurality of splice trays 2 are separately hinged to the base 1. In this way, when splice trays 2 of different specifications are required for replacement or one of the splice trays 2 on the base 1 is damaged, an original splice tray 2 may be detached from the base 1, and then a new splice tray 2 may be hinged to the base 1, thereby greatly facilitating replacement of a splice tray 2.

A manner of disposing the plurality of splice trays 2 on the base 1 is not unique. FIG. 4 shows a manner of disposing the plurality of splice trays 2 on the base 1. Specifically, there are an even number of splice trays 2, every two splice trays 2 overlap each other and form a splice tray group 2', and when a quantity of splice tray groups 2' is greater than or equal to 2, the splice tray groups 2' are disposed in a staggered manner. In such a disposition manner, the splice tray groups 2' can be independent of each other and do not affect each other, and when a cable in one of the splice tray groups 2' is maintained, normal operation of a cable in another splice tray group 2' is not affected.

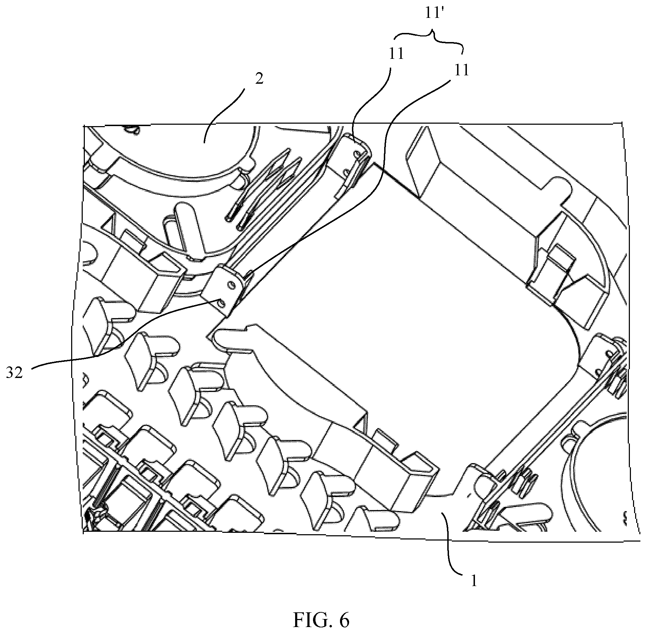

Referring to FIG. 6, a plurality of first bump groups 11' are fastened on an upper surface of the base 1. Each first bump group 11' is correspondingly connected to one splice tray group 2'. Each first bump group 11' includes two first bumps 11 disposed opposite to each other. Two connection lugs 22 are disposed on a side edge of the splice tray 2 (as shown in FIG. 7). The two connection lugs 22 are hinged to the two first bumps 11 respectively by using a first hinged structure 3 (as shown in FIG. 5). Two splice trays 2 in each splice tray group 2' are respectively hinged to first bumps 11 disposed on the base 1 by using connection lugs 22 disposed on side edges of the splice trays 2. Therefore, when a cable in a splice tray 2 located on a lower part of the splice tray group 2' is maintained, a splice tray 2 located on an upper part may be turned, so that the splice tray 2 located on the upper part does not block the splice tray 2 located on the lower part, thereby facilitating the maintenance of the operator. In addition, the first bump group 11' may alternatively include one first bump 11. One connection lug 22 may alternatively be disposed on a side edge of the splicing and termination tray 2. The connection lug 22 is hinged to the first bump 11 by using the first hinged structure 3. However, compared with the solution of disposing one first bump 11 and one connection lug 22, based on the solution of disposing two first bumps 11 and two connection lugs 22, turning of the splice trays 2 in the splice tray group 2' can be more stable, and the splice trays 2 more easily achieve balance during turning.

To facilitate detachment and mounting of the splice trays 2 in the splice tray group 2' and the base 1, as shown in FIG. 5, FIG. 6, and FIG. 7, the two connection lugs 22 each are made of an elastic material. The first hinged structure 3 includes a first rotating shaft 31 and a first hinged hole 32. One first rotating shaft 31 is disposed on each of the two connection lugs 22. The first rotating shafts 31 on the two connection lugs 22 are located on a same axis. A first hinged hole 32 corresponding to the first rotating shaft 31 is disposed on the first bump 11. The first rotating shaft 31 passes through the first hinged hole 32. The two connection lugs 22 each are made of an elastic material, and the elastic material may be deformed when subject to a force and can restore an original shape after the force is released. In this way, when the two splice trays 2 in the splice tray group 2' need to be detached and replaced, an external force may be applied to the connection lugs 22, so that the two connection lugs 22 generate elastic deformation, and the first rotating shafts 31 on the two connection lugs 22 are separated from the first hinged holes 32 corresponding to the first rotating shafts 31, thereby implementing convenient detachment of the two splice trays 2 in the splice tray group 2' and the base 1. Similar to the detachment, an external force is applied to the two connection lugs 22, so that the first rotating shafts 31 on the two connection lugs 22 are hinged to the first hinged holes 32 corresponding to the first rotating shafts 31, thereby implementing convenient mounting of the two splice trays 2 in the splice tray group 2' and the base 1.

In addition, disposition positions of the first rotating shafts 31 and the first hinged holes 32 may alternatively be exchanged. Specifically, one first hinged hole 32 is provided on each of the two connection lugs 22. The first hinged holes 32 on the two connection lugs 22 are located on a same axis. A first rotating shaft 31 corresponding to the first hinged hole 32 is disposed on the first bump 11. The first rotating shaft 31 passes through the first hinged hole 32. Based on the solution, convenient detachment and mounting of the two splice trays 2 in the splice tray group 2' and the base 1 can also be implemented.

The following is another manner of disposing the plurality of splice trays 2 on the base 1 (where the manner is not shown in the figures), not according to the claimed invention. Specifically, the plurality of splice trays 2 are arranged along a same horizontal line. One end of the splice tray 2 is hinged to an upper surface of the base 1, and the other end of the splice tray 2 is arranged on another splice tray 2 adjacent to the splice tray 2. One end of the splice tray 2 is arranged on the another splice tray 2 adjacent to the splice tray 2. In this way, the plurality of splice trays 2 partially overlap each other, so that occupation space of the splice tray 2 can be reduced, and more splice trays 2 can be placed into the splicing and termination tray when a total volume of the splicing and termination tray remains unchanged.

A plurality of second bumps are fastened on the upper surface of the base 1. Each second bump is correspondingly connected to one splice tray 2. A second rotating shaft is disposed at one end of the splice tray 2. The second bump is provided with a second hinged hole along a direction parallel to the upper surface of the base 1. The second rotating shaft and the second hinged hole are engaged through rotation. The second rotating shaft and the second hinged hole are engaged through rotation. In this way, the splice trays 2 can turn around the second rotating shafts, thereby resolving, through the turning of the splice trays 2, a problem that the splice trays 2 block each other, and facilitating the maintenance of the operator.

To facilitate replacement of the splice tray 2, a second assembly slot is provided on an upper surface of the second bump. The second assembly slot communicates with the second hinged hole. The second rotating shaft is clamped into the second hinged hole through the second assembly slot. The second assembly slot communicates with the second hinged hole. In this way, the second rotating shaft can be clamped into the second hinged hole through the second assembly slot, and can be smoothly removed from the second hinged hole through the second assembly slot, thereby facilitating detachment of the splice tray 2, and facilitating replacement of splice trays 2 of a plurality of splice specifications.

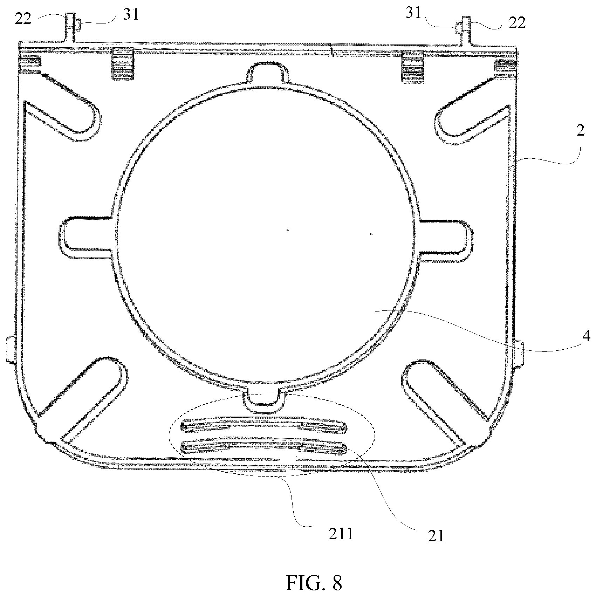

Referring to FIG. 8, a plurality of bosses 4 are disposed in the splice tray 2. A side wall of the boss 4 is configured to wind the to-be-spliced cable. If a radius of a corner of the side wall of the boss 4 is excessively small, when the cable is wound on the boss 4, the cable is excessively bent and easily broken. In this way, a service life of the cable is reduced. This does not facilitate improvement of a tensile feature of the cable. To resolve the problem, the radius of the corner of the side wall of the boss 4 is greater than or equal to 30 millimeters. This ensures that a bending radius of the cable is not less than 30 millimeters, thereby facilitating improvement of the service life and the tensile feature of the cable.

The objectives, technical solutions, and beneficial effects of the present invention are further described in detail in the foregoing specific implementations. It should be understood that the foregoing descriptions are merely specific implementations of the present invention, but are not intended to limit the protection scope of the present invention, which is defined by the appended claims.

## Claims

1. A splicing and termination tray, comprising a base (1), wherein a plurality of splice trays (2) independent of each other are disposed on the base, each of the splice trays comprises a splice region (21), one or more splice slots (211) are provided in the splice region (21), and one splice slot (211) is configured to fasten one core of to-be-spliced cable;
wherein the plurality of splice trays are detachably separately hinged to the base (1) using two connection lugs (22) disposed on a side edge of each of the splice trays (2); and
wherein there are an even number of splice trays (2), every two splice trays (2) overlap each other and form a splice tray group (2'), and when a quantity of the splice tray groups is greater than or equal to 2, the splice tray groups (2') are disposed in a staggered manner;
wherein a plurality of first bump groups (11') are fastened on an upper surface of the base (1), each first bump group (11') is correspondingly connected to one splice tray group (2'), each first bump group (11') comprises two first bumps (11) disposed opposite to each other, and the two connection lugs (22) are hinged to the two first bumps (11) respectively by using a first hinged structure (3); and
wherein the two connection lugs (22) are each made of an elastic material, the first hinged structure (3) comprises a first rotating shaft (31) and a first hinged hole (32), one first rotating shaft is disposed on each of the two connection lugs (22), the first rotating shafts on the two connection lugs (22) are located on a same axis, a first hinged hole (32) corresponding to the first rotating shaft (31) is disposed on the first bump (11), and the first rotating shaft (31) passes through the first hinged hole (32).

2. The splicing and termination tray according to claim 1, wherein one to four splice slots (211) are provided in the splice region (21).

3. The splicing and termination tray according to claim 2, wherein two splice slots (211) are provided in the splice region (21).

4. A fiber distribution terminal, comprising the splicing and termination tray according to any one of claims 1 to 3.

5. An optical distribution frame, comprising the splicing and termination tray according to any one of claims 1 to 3.

## Patentansprüche

1. Spleiß- und Terminierungsschale, umfassend eine Basis (1), wobei eine Vielzahl voneinander unabhängiger Spleißschalen (2) auf der Basis angeordnet ist, jede der Spleißschalen einen Spleißbereich (21) umfasst, ein oder mehrere Spleißschlitze (211) in dem Spleißbereich (21) bereitgestellt sind und ein Spleißschlitz (211) dazu konfiguriert ist, eine Ader eines zu spleißenden Kabels zu befestigen;
wobei die Vielzahl von Spleißschalen unter Verwendung zweier Verbindungslaschen (22), die auf einer Seitenkante jeder der Spleißschalen (2) angeordnet sind, lösbar einzeln an der Basis (1) angelenkt ist; und
wobei es eine gerade Anzahl an Spleißschalen (2) gibt, jeweils zwei Spleißschalen (2) einander überlappen und eine Spleißschalengruppe (2') bilden und, wenn eine Anzahl der Spleißschalengruppen größer oder gleich 2 ist, die Spleißschalengruppen (2') in einer versetzten Weise angeordnet sind;
wobei eine Vielzahl erster Höckergruppen (11') auf einer oberen Oberfläche der Basis (1) befestigt ist, jede erste Höckergruppe (11') entsprechend mit einer Spleißschalengruppe (2') verbunden ist, jede erste Höckergruppe (11') zwei einander gegenüberliegend angeordnete erste Höcker (11) umfasst und die zwei Verbindungslaschen (22) unter Verwendung einer ersten gelenkigen Struktur (3) jeweils an den beiden ersten Höckern (11) angelenkt sind; und
wobei die beiden Verbindungslaschen (22) jeweils aus einem elastischen Material hergestellt sind, die erste gelenkige Struktur (3) eine erste Drehwelle (31) und ein erstes gelenkiges Loch (32) umfasst, eine erste Drehwelle auf jeder der zwei Verbindungslaschen (22) angeordnet ist, die ersten Drehwellen auf den zwei Verbindungslaschen (22) auf einer gleichen Achse liegen, ein erstes gelenkiges Loch (32), das der ersten Drehwelle (31) entspricht, auf dem ersten Höcker (11) angeordnet ist und die erste Drehwelle (31) durch das erste gelenkige Loch (32) hindurch verläuft.

2. Spleiß- und Terminierungsschale nach Anspruch 1, wobei ein bis vier Spleißschlitze (211) in dem Spleißbereich (21) bereitgestellt sind.

3. Spleiß- und Terminierungsschale nach Anspruch 2, wobei zwei Spleißschlitze (211) in dem Spleißbereich (21) bereitgestellt sind.

4. Faserverteilungsterminal, umfassend die Spleiß- und Terminierungsschale nach einem der Ansprüche 1 bis 3.

5. Optischer Verteilungsrahmen, umfassend die Spleiß- und Terminierungsschale nach einem der Ansprüche 1 bis 3.

## Revendications

1. Plateau d'épissage et de terminaison, comprenant une base (1), dans laquelle une pluralité de plateaux d'épissage (2) indépendants les uns des autres sont disposés sur la base, chacun des plateaux d'épissage comprend une région d'épissage (21), une ou plusieurs fentes d'épissage (211) sont prévues dans la région d'épissage (21), et une fente d'épissage (211) est configurée pour fixer un noyau de câble à épisser ;
dans laquelle la pluralité de plateaux d'épissage sont articulés séparément de manière amovible sur la base (1) à l'aide de deux pattes de connexion (22) disposées sur un bord latéral de chacun des plateaux d'épissage (2) ; et
dans laquelle il y a un nombre pair de plateaux d'épissage (2), tous les deux plateaux d'épissage (2) se chevauchent et forment un groupe de plateaux d'épissage (2'), et lorsqu'une quantité des groupes de plateaux d'épissage est supérieure ou égale à 2, les groupes de plateaux d'épissage (2') sont disposés de manière décalée ;
dans laquelle une pluralité de premiers groupes de bosses (11') sont fixés sur une surface supérieure de la base (1), chaque premier groupe de bosses (11') est connecté de manière correspondante à un groupe de plateaux d'épissage (2'), chaque premier groupe de bosses (11') comprend deux premières bosses (11) disposées en face l'une de l'autre, et les deux pattes de connexion (22) sont articulées sur les deux premières bosses (11) respectivement en utilisant une première structure articulée (3) ; et
dans laquelle les deux pattes de connexion (22) sont chacune constituées d'un matériau élastique, la première structure articulée (3) comprend un premier arbre rotatif (31) et un premier trou articulé (32), un premier arbre rotatif est disposé sur chacune des deux pattes de connexion (22), les premiers arbres rotatifs sur les deux pattes de connexion (22) sont situés sur un même axe, un premier trou articulé (32) correspondant au premier arbre rotatif (31) est disposé sur la première bosse (11), et le premier arbre rotatif (31) passe à travers le premier trou articulé (32).

2. Plateau d'épissage et de terminaison selon la revendication 1, dans lequel une à quatre fentes d'épissage (211) sont prévues dans la région d'épissage (21).

3. Plateau d'épissage et de terminaison selon la revendication 2, dans lequel deux fentes d'épissage (211) sont prévues dans la région d'épissage (21).

4. Terminal de distribution de fibres, comprenant le plateau d'épissage et de terminaison selon l'une quelconque des revendications 1 à 3.

5. Répartiteur optique, comprenant le plateau d'épissage et de terminaison selon l'une quelconque des revendications 1 à 3.
